# EUROPEAN PATENT APPLICATION

(11) **EP 4 194 687 A1**
(43) Date of publication of application: **14.06.2023**
(21) Application number: 21213091.8
(22) Date of filing: 08.12.2021
(51) Int. Cl.: F03D 7/04, F03D 17/00

(54) **WIND TURBINE CONTROL ARRANGEMENT**

(71) Applicant: Siemens Gamesa Renewable Energy A/S, 7330 Brande (DK)
(72) Inventor: Manjunatha, Vinay Kumar, 560024 Bengaluru (IN)
(74) Representative: SGRE-Association

(57) **Abstract**

The invention describes a wind turbine control arrangement (1) comprising a number of wind turbines (10W, 10X) and a remote computing facility (11) adapted to issue control commands to the wind turbines (10W, 10X) on the basis of data received from the wind turbines (10W, 10X); characterized in that a wind turbine (10W) comprises a communication interface adapted to enable transfer of data (Dₒᵤₜ) between that wind turbine (10W) and the remote computing facility (12); and a health monitoring means (10E) adapted to determine the health status (H1, H2, H2) of that wind turbine (10W) and to adjust the rate of data transfer to the remote data management facility (11) according to the health status (H1, H2, H2).

## Description

### Background

A wind farm comprising many wind turbines can be operated by issuing commands and power setpoints from a remote facility. In order to be able to generate appropriate setpoints for any operating condition and in response to events such as faults or grid frequency excursions, the remote facility should also be able to process data collected locally by all wind turbines of the wind farm. Generally, a wind turbine is equipped with many sensors than can collect up-to-date information about its various components of the wind turbine, and a remote facility can collect and evaluate the sensor data from all wind turbines of a wind farm. Because of the fluctuating nature of wind, and the individual behaviour of the wind turbines of a wind farm, the control of a large wind farm can be very complex, requiring large quantities of data to be transferred, processed and stored. Typically, a wind farm will transfer very large quantities of data from the multitude of sensors deployed in the wind turbines, which generate data essentially continuously. Examples of the various types of sensor are: temperature, air pressure, pitch angle, humidity, oil level, torque, vibration, wind speed, wind direction, power factor, etc. The different types of sensor generate different quantities of data at different sampling rates. A temperature sensor may generate a relatively small amount of data, for example 2 bytes every second, but a current or voltage sensor with a sampling rate of several kHz may generate a significantly larger amount, for example 12,288 bytes per second. In the prior art, all such data is uploaded to a remote facility such as a cloud computing platform or data centre, where the data can be processed, evaluated and stored. However, the management of such large quantities of data in a remote facility comes at a cost that can be in the order of several million Euros over the lifetime of a wind farm.

Even so, it is becoming more widespread to manage critical wind farm control applications in a remote facility such as a cloud computing service using data provided by sensors of the wind turbines. However, bandwidth limitations or network faults may delay the commands and setpoints from applications. If commands issued to make a wind turbine respond to a problem with one of its components are not received on time, the control action to respond to that problem will also be delayed. This can lead to a further deterioration in the component, making the wind turbine health degrade more rapidly. When the wind turbine is not able to perform as required, it will be shut down, leading to loss in revenue and possible penalties.

It is therefore an object of the invention to provide an improvement to communication between wind turbines and a remote computing facility.

This object is achieved by the claimed wind turbine control arrangement and by the claimed method of operating the wind turbine control arrangement.

### Description

According to the invention, the wind turbine control arrangement comprising a number of wind turbines and a remote computing facility adapted to issue control commands to the wind turbines on the basis of data received from the wind turbines. The wind turbine control arrangement is characterized in that a wind turbine comprises a communication interface adapted to enable transfer of data between that wind turbine and the remote computing facility; a health monitoring means adapted to determine the health status of that wind turbine; and a data rate adjustment module adapted to adjust the rate of data transfer to the remote data management facility according to the health status of that wind turbine.

An advantage of the inventive control arrangement is that the quantity of data transferred from a wind turbine to the remote computing facility is made dependent on the health status of that wind turbine. The invention is based on the insight that much of the data transferred from a "healthy" wind turbine is "uninteresting", since a healthy wind turbine functions as it should. Similarly, the data collected by a particular sensor may be "uninteresting" if the component or environment being monitored does not show any departure from the norm. Based on this insight, the quantity of data sent to the remote computing facility can be kept to a minimum as long as the wind turbine is healthy. Later on during the lifetime of the wind turbine, one or more components will start to show signs of wear, and the health of the wind turbine deteriorates as a whole. The quantity of data sent to the remote computing facility can then be increased, i.e. sensor data is sent more often. With the inventive method, a remote computing facility can generate commands and setpoints that reflect the health status of the wind turbines of the wind farm.

According to the invention, in the method of operating such a wind turbine control arrangement, the health monitoring means of a wind turbine classifies the health status of that wind turbine relative to a first health threshold within which the wind turbine is deemed to be healthy, and beyond which the health of the wind turbine is deemed to have deteriorated. The health monitoring means classifies the health status of that wind turbine relative to at least one further health threshold beyond which the health of the wind turbine is deemed to have deteriorated further.

An advantage of the inventive method is that data can be sent to the remote computing facility at a favourably low rate as long as the wind turbine is healthy, i.e. as long as its health status is within the first health threshold. The reduced amount of data results in significant savings, since the costs of managing and storing the data are also reduced. Later on during the lifetime of the wind turbine, as its health deteriorates beyond the first health threshold, greater quantities of data are sent to the remote computing facility, and/or data is sent at an increased rate.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that a wind farm comprises many wind turbines, for example several hundred wind turbines. The expressions "wind farm", "wind power plant" and "wind park" shall be understood to be synonyms and may be used interchangeably herein. A wind farm can be an offshore wind farm, in communication via a suitable communications channel with a remote computing service. The computing service can be located onshore, or in the vicinity of the offshore wind farm.

While the invention is explained in the context of a wind farm comprising many wind turbines, it shall be understood that the invention can equally apply to a wind power plant comprising a single wind turbine or only a small number of wind turbines, in communication with a remote computing service.

The health of a wind turbine shall be understood as a measure of the collective health of all relevant components of the wind turbine. For example, if a critical component such as a cooling arrangement or a de-icing arrangement is faulty, then the overall health of that wind turbine is poor, since it may be unable to operate reliably without those components. The nature of the faults of such components can determine the extent of deterioration of wind turbine health.

A wind turbine is generally equipped with many sensors to monitor various conditions, for example vibration sensors, strain sensors, temperature sensors etc. In a preferred embodiment of the invention, a wind turbine is equipped with a means of locally evaluating the output of various sensors, and the health status of that wind turbine is determined on the basis of the sensor outputs. The sensor data evaluation can be performed essentially continuously or at suitably short intervals, so that the health assessment is effectively always up-to-date.

An example of a sensor might be a temperature sensor placed to monitor the temperature inside the wind turbine generator. A cooling arrangement such as a fluid heat exchanger can be provided to keep the temperature of the generator to within a preferred range in order to optimise the generator's performance. If the cooling arrangement is performing correctly, the generator temperature will be maintained in the preferred range, for example 35°C - 40°C. The "health" of the cooling arrangement can therefore be assumed to be fine. However, the performance of the cooling arrangement may deteriorate for any number of reasons, for example due to a blockage in a duct, seal damage, electrical fault, coolant degradation, etc. Should the cooling arrangement be affected in such a way, it may be unable to properly extract heat from the generator, and the temperature sensor may report a higher temperature, for example 40°C - 45°C. The temperature may continue to rise if the fault in the cooling arrangement is severe. The health monitoring means of that wind turbine will then deduce that the health of the wind turbine is deteriorating.

In a preferred embodiment of the invention, the health monitoring means is preferably realised as a "computing device at the edge", which shall be understood to mean a data-processing device that is capable of performing one or more functions that would otherwise need to be fulfilled by the remote computing facility. In the following, the terms "health monitoring means", "computing device at the edge", "edge controller" and "edge device" may be used interchangeably.

When all components of a wind turbine operate correctly, the overall health or health status of that wind turbine is considered to be "good". When a component no longer functions perfectly but can still operate, or if the full functionality of that component is not essential at the present time, the health status of that wind turbine can be regarded as "acceptable" or "moderate". When a critical component no longer functions as required, the health status of that wind turbine can be regarded as "inacceptable" or "poor". A transition from one health status to another can be regarded as crossing a threshold, for example from "good" to "moderate", or from "moderate" to "poor".

In an exemplary wind turbine, the complete arrangement of sensors - with their different sampling rates and output data formats - generates a large amount of data, for example a total of 18145080 bytes of data every minute. The invention is based on the insight that, as long as a wind turbine is already regarded as "healthy" (i.e. all elements and components of the wind turbine are functioning correctly), much of the data generated by the sensors is superfluous or of little interest. Therefore, according to the invention, data is transferred to the remote data management facility at a first data transfer rate when the health status of the wind turbine is within the first threshold. This first data transfer rate can be the lowest or slowest data transfer rate. For example, data from the wind turbine sensors is allowed to be generated as usual (the sensors perform in their usual manner), but data is only transferred to the remote facility at widely-spaced first intervals, for example every ten minutes. At the end of such a 10-minute interval, the most recent output of each sensor is uploaded to the remote facility. Alternatively, a contribution from each of the various sensors - which generate different amounts of data at different rates - is collected over a first interval and aggregated into a single packet which is sent at the end of the first interval. In this way, instead of streaming a continual feed of wind turbine data to the remote facility, data "snapshots" are uploaded instead. In the scenario given above, for example, only 18,145,080 bytes might be uploaded every 10 minutes, compared to 181,450,800 of data over the same ten-minute interval. In this way, the amount of data transferred to the remote data management facility is only 10% of the total data that would be uploaded in a prior art approach.

Data is transferred to the remote data management facility at a second data transfer rate when the health status of that wind turbine has deteriorated beyond the first threshold, e.g. the health status of the wind turbine has progressed from "good" to "moderate". Again, the sensors perform in their usual manner, but data is transferred to the remote facility at second intervals that are shorter than the first intervals described above, for example every five minutes. At the end of each 5-minute interval, the most recent output of each sensor is uploaded to the remote facility. Alternatively or in addition, a contribution from each of the various sensors - which generate different amounts of data at different rates - is collected over the second interval and aggregated into a single packet which is sent at the end of the second interval. Here also, instead of streaming a continual feed of wind turbine data to the remote facility, data "snapshots" are uploaded, albeit at a more frequent rate than when the wind turbine health was "good". In the example given above, a wind turbine in "moderate" health might transmit 18,145,080 bytes every five minutes. This data quantity is twice as large as the amount of data uploaded by the "healthy" wind turbine, but only 20% of the amount that would be uploaded using the prior art approach.

In a further preferred embodiment of the invention, data is transferred to the remote data management facility at a third data transfer rate when the health status of that wind turbine has deteriorated beyond a second threshold, e.g. the health status of the wind turbine has progressed from "moderate" to "poor". In this case, all sensor data is transferred to the remote facility. In the example given above, a wind turbine in "poor" health will transmit the complete amount of 18,145,080 bytes every minute, and corresponds to the amount of data sent using the prior art approach.

Instead of the exemplary three-stage healthy/moderate/poor classification described above, any number of stages or health status levels can be implemented, for example excellent/good/satisfactory/poor or any other suitable classification. The interval lengths may be chosen accordingly, and may be longer or shorter than the exemplary intervals mentioned above.

Exceptions may be made to the choice of data rate explained above. For example, a wind turbine installed in complex terrain (e.g. a hilly part of a larger wind farm) and experiencing high turbulence intensity may transmit data at a higher data rate that wind turbines in less complex regions of the wind farm.

The data set to the remote computing facility can be tailored to include more information regarding potentially faulty component(s). In a particularly preferred embodiment of the invention, data from any sensor(s) associated with non-healthy components may be sent more frequently than data from any sensor(s) associated with a healthy components. For example, the data generated by the sensors of one or more potentially faulty components can be streamed essentially continuously, while data from unproblematic or "healthy" components can be uploaded at one of the more infrequent intervals mentioned above. In other words, data from sensors relating to a potentially faulty part or component might be streamed at the third data transfer rate, while data from sensors relating to healthy components or parts may be streamed at a rate corresponding to the overall wind turbine health, for example the first rate (overall wind turbine health is good, with the exception of the faulty component) or the second rate (overall wind turbine health is moderate, with the exception of the faulty component).

For a wind farm controlled from a remote computing facility, most of the commands to the wind turbines will originate from the remote computing facility. For example, the remote computing facility may issue updated power setpoints for the wind turbines every few minutes to respond to changing wind conditions, changing grid requirements, etc. However, some events or situations occur locally to a single wind turbine, and the remote computing facility must then respond by generating setpoints and/or commands to react to the situation locally affecting that wind turbine. The need for such a "tailored" response can add significantly to the overall costs of running the wind farm. Therefore, in a preferred embodiment of the invention, the health monitoring means is realised as a controller which can evaluate sensor data and which can generate local control commands for that wind turbine on the basis of the sensor data. In this way, the wind turbine is equipped with "edge computing" capability.

For example, the sensor arrangement of a wind turbine may also comprise one or more image sensors arranged to obtain images of the exterior environment. Images from a camera arrangement placed to observe the exterior of the wind turbine can be analysed locally in the health monitoring means to detect a flock or birds, an approaching sandstorm, an approaching hailstorm etc. The health monitoring means can initiate local control commands to correctly respond to such an event. A quick response to the local event is made possible by local evaluation of the image data. Furthermore, the cost of transferring many gigabytes of image data to the remote computing facility, and the cost of processing and storing that data, can be saved. Over the lifetime of a wind farm, significant savings can be accrued by locally processing such data.

All wind turbines of a wind farm may be equipped with a communication interface for the transfer of data to the remote computing facility. In a preferred embodiment of the invention, the wind farm also includes wind turbines that are not equipped to communicate with the remote computing facility, i.e. the wind farm comprises a first set of wind turbines that can communicate with the remote computing facility; and a second set of wind turbines, each of which can communicate with a wind turbine of the first set. In this way, only the wind turbines of the first set will send data to the remote computing facility, to reduce the data traffic even further. Of course, the remote computing facility can still control the wind turbines of the second set, and a wind turbine of the first set is preferably configured to relay data between the remote data management facility and a wind turbine of the second set.

In the event of a network fault between a wind farm and the remote computing facility, sensor data may be stored in the edge device or health monitoring means. When the network connection is once again restored, the accumulated data can be transferred to the remote computing facility which can then obtain a clear picture of the health of the wind turbines in the wind farm. In case of a local network fault between a wind turbine and the remote computing facility, an adjacent wind turbine may perform the data transfer for the wind turbine with the network fault.

When the wind turbine health is at a transition to a worse health status, the health monitoring means can issue various commands in an attempt to maintain the current health status. the commands and the resulting sensor data can be collected and stored for evaluation by machine learning or artificial intelligence. In this way, the health monitoring means can learn how to recognise patterns in sensor data and how best to respond to the corresponding situation. A machine learning (ML) or artificial intelligence (AI) model can be trained to learn from the data using supervised, self-supervised, or unsupervised techniques so that the next time a similar situation occurs, the health monitoring means can locally control the wind turbine with more confidence to maintain the "better" health status for longer. For example, the health monitoring means can learn that a potentially problematic elevated generator temperature can be remedied by running the cooling unit at an increased fan speed for only 20 minutes instead of a default instruction to "run at increased fan speed for 30 min".

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind farm in a first embodiment of the inventive control arrangement;
Figure 2 shows an exemplary wind turbine of the wind farm of Figure 1;
Figure 3 shows a health monitoring arrangement of the wind turbine of Figure 2;
Figure 4 illustrates an exemplary progression of the health status of a wind turbine;
Figure 5 shows a wind farm in a second embodiment of the inventive control arrangement;
Figure 6 and Figure 7 show exemplary control flowcharts for the inventive method.

In the diagrams, like numbers refer to like objects throughout. Objects in the diagrams are not necessarily drawn to scale.

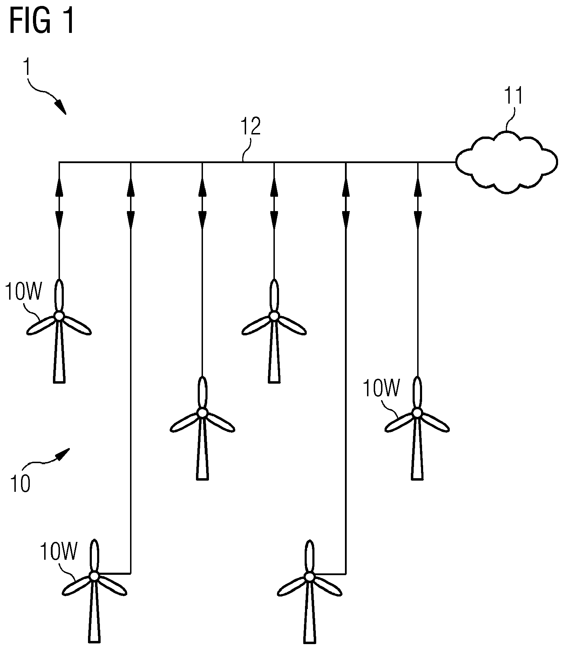

Figure 1 shows a wind farm 10 in a first embodiment of the inventive control arrangement 1. The wind farm comprises many wind turbines 10W, only a few are shown here for clarity. Each wind turbine 10W can communicate over a suitable communications channel 12 with a remote computing facility 11, indicated here as a cloud computing facility. The computing facility 11 can be in the vicinity of the wind farm 10 or at a remote location.

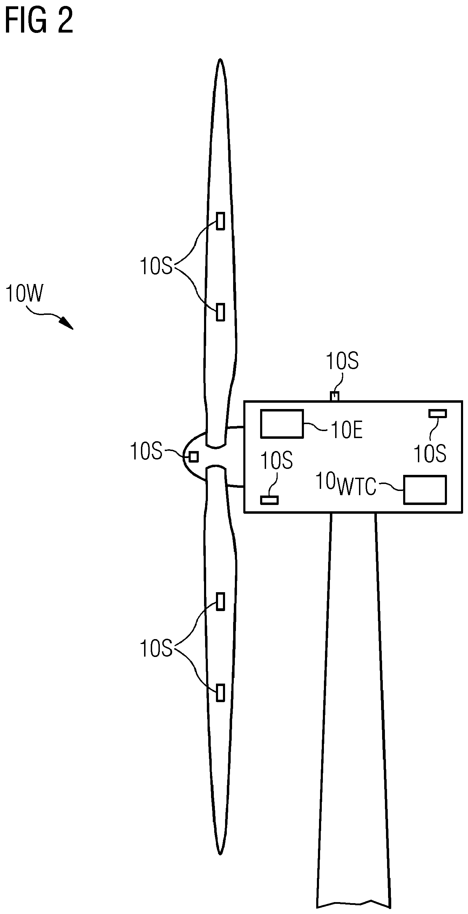

Figure 2 shows an exemplary wind turbine 10W of the wind farm 10 of Figure 1. The wind turbine 10W is equipped with various sensors 10S at suitable positions, to monitor performance of the wind turbine over its lifetime. Here, vibration sensors can detect vibration of the rotor blades; image sensors 10S can record the interior and exterior environment; temperature sensors 10S can monitor temperature in critical regions of te wind turbine 10W, etc. The various sensors 10S generate different amounts of data at different rates.

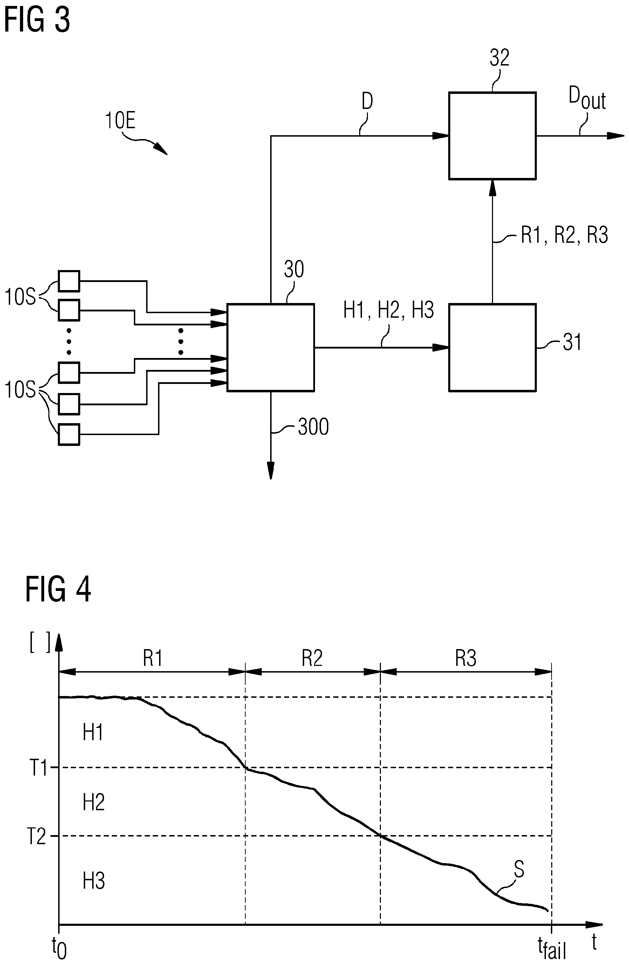

Instead of uploading all sensor data to the remote computing facility 11 all the time, a health monitoring means 10E (realised as an edge computing device) performs initial sensor data evaluation. The amount of data to be sent to remote computing facility 11, and the rate at which that data is to be transmitted, is determined by the edge computing device 10E on the basis of the health status of the wind turbine 10W. This is illustrated in Figure 3, which shows a health monitoring arrangement 10E realised as an "edge device" in the wind turbine of Figure 2. Data from the sensors 10S is fed to a health assessment module 30, which analyses the incoming sensor data to determine the overall health status of the wind turbine 10W. Here, the health of the wind turbine 10W can be any of three states H1, H2, H3, for example "good", "moderate" and "poor". The set of sensor data D to be sent to the remote computing facility 11, and the rate R1, R2, R3 at which that data is to be transmitted, is determined by the edge computing device 10E on the basis of the health status H1, H2, H3. To this end, a data rate adjustment module 31 chooses the appropriate data transfer rate R1, R2, R3 and forwards this to a communication interface 32 that is configured to exchange data between the wind turbine 10W and the remote computing facility 11. An output data packet Dout is sent at the selected data transfer rate R1, R2, R3. For example, when the wind turbine health is "good", a snapshot of the sensor data may be sent at a slow rate R1 such as every 20 minutes; when the wind turbine health is "moderate", a snapshot of the sensor data may be sent at a moderate rate R2 such as every 10 minutes; when the wind turbine health is "poor", the entire volume of sensor data is uploaded, i.e. at the highest rate R3.

Here, the edge computing device 10E also generates local control commands 300 on the basis of sensor data, for example to reduce the rotational velocity of the aerodynamic rotor if a flock of birds is approaching that wind turbine 10W.

Figure 4 illustrates an exemplary progression of the health status S of a wind turbine. Initially, after commissioning at time t0, the wind turbine is in good health H1. During this stage, all components function as they should. With the inventive method, sensor data is uploaded at the slowest rate R1 to the remote facility 11. The relatively low quantity of data that is processed and stored in the remote computing facility 11 results in considerable savings.

As time progresses, various components of the wind turbine deteriorate and the overall health status S reduces towards a first threshold T1. Beyond this threshold T1, the wind turbine is in moderate health H2. In this stage of the wind turbine lifetime, data is uploaded at a higher rate R2, and the collected data is assessed at the remote computing facility which can take into account the sub-optimal performance of that wind turbine when issuing commands and setpoints.

As time progresses further, one or components of the wind turbine can be damaged from wear and tear, fatigue, impact etc. and may fail to function reliably, so that the overall health status S reduces towards a second threshold T2. Beyond this threshold T2, the wind turbine is in poor health H3. All sensor data is uploaded to the remote facility 11. In this stage of the wind turbine lifetime, the collected data is assessed closely at the remote computing facility so that this can intervene in good time by shutting down the wind turbine to prevent severe and costly damage, for example catastrophic failure of a rotor blade, a main bearing, a yaw drive motor, etc.

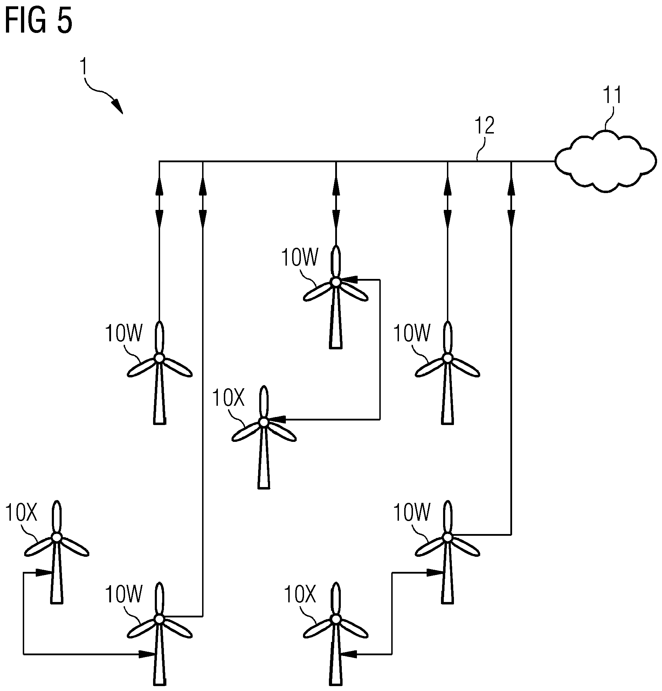

Figure 5 shows a wind farm in a second embodiment of the inventive control arrangement 1. The wind turbines need not necessarily all be of the same type. Here, a first set of wind turbines 10W operates as described in Figure 1 above, while the "silent" wind turbines 10X of a second set only communicate with wind turbines 10W of the first set. In other words, the wind turbines 10W of the first set will upload data to the remote computing facility 11, but the wind turbines 10X of the second set will only send data to wind turbines 10W of the first set.

A wind turbine 10X of the second set shall be understood to have the same health status as a wind turbine 10W of the first set, and two such functionally similar wind turbines are "partnered" or "paired". The pairings can be reconfigured as the health status of the various wind turbines changes, so that each wind turbine is always partnered with another wind turbine that has the same health status.

In an exemplary scenario, a "healthy" wind turbine 10X communicates with one or more adjacent wind turbines 10W of the second set to check their health status, and partners itself with one or more "healthy" wind turbines 10W. The partnered wind turbines can be assumed to be geographically close and/or in similar terrain. The "representative" wind turbine 10X will send its data at the slowest rate R1 to the data processing facility, along with identifying information for its "silent" partner wind turbine(s) 10W. The data uploaded by the "representative" wind turbine 10X can be assumed to apply also to its partnered wind turbine(s) 10W. Therefore, the amount of data uploaded from the wind turbines 10X, 10W can be drastically reduced, particularly when most of the wind turbines are healthy.

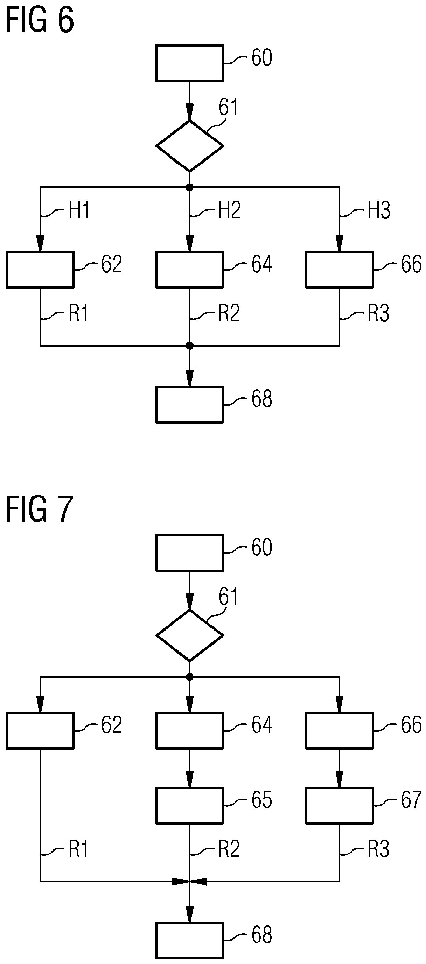

Figure 6 and Figure 7 show exemplary control flowcharts for the inventive method. In a first step 60, sensor data is collected at the edge computing device or health monitoring means. The health status of the wind turbine is determined in step 61. Depending on the health status H1, H2, H3, control proceeds to step 62, step 64, or step 66. In each case, an appropriate quantity of data is compiled and a suitable data transfer rate R1, R2, R3 is chosen before uploading the data to the remote computing facility in step 68. In the flowchart of Figure 7, the health monitoring means 10E of the wind turbine 10W can examine sensor data when the wind turbine health status is "moderate" H2 or "poor" H3, and can locally generate control commands accordingly in steps 64, 65. In an exemplary situation, the health status of the wind turbine may be regarded as "moderate" H2 on account of a generator temperature that is higher than the rated temperature. In the event of a sudden fault such as failure of a fan or pump of the generator's cooling arrangement, the generator temperature will increase even further. To avoid further deterioration of that wind turbine's health status, commands or setpoints can be issued in step 64 to curtail the output power, thereby quickly taking measures to reduce the temperature in the generator until the cooling system can be repaired, without having to wait until the remote data processing facility responds. After some time, the remote facility may evaluate the data uploaded by that wind turbine and can issue commands or setpoints to remedy the fault or to take other action, and these commands will override the local "rapid response" commands issued earlier by the health monitoring means 10E in step 64.

Although the present invention has been disclosed in the form of preferred embodiments and variations thereon, it will be understood that numerous additional modifications and variations could be made thereto without departing from the scope of the invention. For example, in a wind park with a set of "silent" wind turbines and a set of "representative" wind turbines as described above, a "representative" wind turbine can communicate with an adjacent wind turbine to check on its health status and can decide whether or not that wind turbine should upload sensor data.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A wind turbine control arrangement (1) comprising a number of wind turbines (10W, 10X) and a remote computing facility (11) adapted to issue control commands to the wind turbines (10W, 10X) on the basis of data received from the wind turbines (10W, 10X); **characterized in that**
a wind turbine (10W) comprises
- a communication interface adapted to enable transfer of data (Dₒᵤₜ) between that wind turbine (10W) and the remote computing facility (12);
- a health monitoring means (10E) adapted to determine the health status (H1, H2, H2) of that wind turbine (10W) and to adjust the rate of data transfer to the remote data management facility (11) according to the health status (H1, H2, H2).

2. A control arrangement according to the preceding claim, wherein a wind turbine (10W, 10X) comprises a sensor arrangement with a plurality of sensors (10S), and wherein the health status (H1, H2, H2) of that wind turbine (10W) is determined on the basis of data collected by at least one sensor (10S) of the sensor arrangement.

3. A control arrangement according to any of the preceding claims, wherein a sensor (10S) is arranged to monitor a component of the wind turbine (10W).

4. A control arrangement according to any of the preceding claims, wherein the sensor arrangement comprises an image sensor arranged to obtain images of the external environment of the wind turbine (10W).

5. A control arrangement according to any of the preceding claims, wherein the health monitoring means (10E) is adapted to determine the health status (H1, H2, H2) from an evaluation of sensor data.

6. A control arrangement according to the preceding claim, wherein the health monitoring means (10E) is adapted to generate local control commands (300) for that wind turbine (10W) on the basis of the determined health status (H1, H2, H2) .

7. A control arrangement according to any of the preceding claims, comprising
- a first set of wind turbines (10W), wherein each wind turbine (10W) of the first set is equipped with a communication interface adapted to enable transfer of data (Dₒᵤₜ) between that wind turbine (10W) and the remote computing facility (11); and
- a second set of wind turbines (10X), wherein a wind turbine (10W) of the second set is paired with a wind turbine (10W) of the first set according to health status (H1, H2, H2).

8. A control arrangement according to claim 7, wherein a pairing between a wind turbine (10W) of the first set and a wind turbine (10W) of the second set is re-established in response to a change in health status of either wind turbine (10W, 10X) .

9. A method of operating the wind turbine control arrangement (1) according to any of claims 1 to 8, wherein the health monitoring means (10E) of a wind turbine (10W)
- classifies the health status (H1, H2, H2) of that wind turbine (10W) relative to at least one health threshold (T1, T2, T3) beyond which the health of the wind turbine (10W) is deemed to have deteriorated; and
- increases the data transfer rate (R1, R2, R3) following a deterioration in health status (H1, H2, H2).

10. A method according to the preceding claim, wherein data is transferred to the remote data management facility (11) at a first transfer rate (R1) when the health status (H1) of the wind turbine (10W) is within the first threshold (T1).

11. A method according to any of claims 9 or 10, wherein data is transferred to the remote data management facility (11) at a second data transfer rate (R2) when the health status (H2) of that wind turbine (10W) has deteriorated beyond the first threshold (T1).

12. A method according to the preceding claim, wherein the amount of data transmitted at the first data transfer rate (R1) is at most 20%, more probably at most 10% of the total amount of data generated by the sensors (10S) of a wind turbine (10W).

13. A method according to the preceding claim, wherein the amount of data transmitted at the second data transfer rate (R2) is at most 50%, more probably at most 25% of the total amount of data generated by the sensors (10S) of a wind turbine (10W).

14. A method according to the preceding claim, wherein the amount of data transmitted at the third data transfer rate (R3) is the total amount of data generated by the sensors (10S) of a wind turbine (10W).

15. A computer program product for carrying out steps of the method according to any of claims 9 to 14 when the computer program product is loaded into a memory of the health monitoring means (10E) of a wind turbine (10W) with a control arrangement (1) according to any of claims 1 to 8.
